# EUROPÄISCHE PATENTSCHRIFT

(11) **EP 0 770 100 B1**
(45) Veröffentlichungstag und Bekanntmachung des Hinweises auf die Patenterteilung: **06.10.1999**
(21) Anmeldenummer: 95925821.1
(22) Anmeldetag: 04.07.1995
(51) Int. Cl.: C08F 283/01, C09D 4/06

(54) **STRAHLENHÄRTBARE LACKE UND DEREN VERWENDUNG ZUR HERSTELLUNG MATTER LACKFILME**
RADIATION-HARDENED PAINTS AND USES THEREOF TO PRODUCE MATT COATING FILMS
PEINTURES DURCISSABLES PAR RAYONNEMENT ET LEUR UTILISATION POUR LA PRODUCTION DE FILMS DE PEINTURE MATS

(30) Priorität: 08.07.1994 DE 4424101
(43) Veröffentlichungstag der Anmeldung: 02.05.1997
(73) Patentinhaber: BASF Coatings Aktiengesellschaft, 48165 Münster (DE)
(72) Erfinder: LOBERT, Martin, D-49074 Osnabrück (DE)
(74) Vertreter: Fitzner, Uwe, Dr.
(86) Internationale Anmeldenummer: EP9502583
(87) Internationale Veröffentlichungsnummer: WO9601858

(56) Entgegenhaltungen:
- EP-A- 0 311 288
- WO-A-90/05061

## Beschreibung

Die Erfindung bezieht sich auf strahlenhärtbare Lacke und auf die Verwendung dieser strahlenhärtbaren Lacke zur Herstellung matter Lackfilme.

Strahlenhärtbare Lacke sind bekannt. Es handelt sich dabei um Lackzusammensetzungen, die mit Hilfe von energiereicher Strahlung, insbesondere mit Hilfe von UV-Strahlung oder mit Hilfe von Elektronenstrahlen gehärtet werden. Mit den bekannten strahlenhärtbaren Lacken lassen sich mühelos hochglänzende bis seidenglänzende (Glanzgrad zwischen 100 und 50 Einheiten nach DIN 67 530 bei einem Meßwinkel von 60°) Lackfilme herstellen.

Im Gegensatz dazu bereitet die Herstellung von matten Lackfilmen große Schwierigkeiten. Es gibt eine Reihe von Vorschlägen, dieses technische Problem zu lösen. Gemäß DE-A-29 47 597 werden Lacke eingesetzt, die eine Kombination aus strahlenhärtbaren und hitzehärtbaren Bindemitteln enthalten. Bei Verwendung derartiger Lacke ist nachteiligerweise ein Einbrennschritt notwendig und beim Einsatz von hochreaktiven hitzehärtbaren Komponenten müssen die Lacke als mehrkomponentige Systeme gelagert werden. In der DE-A-22 44 327 wird ein technisch sehr aufwendiges Verfahren zur Herstellung von matten Lackfilmen beschrieben, bei dem der strahlenhärtbare Lack in einer ersten Stufe in einer Atmosphäre, die mindestens 5.000 ppm Sauerstoff enthält, und anschließend in einer zweiten Stufe in einer Atmosphäre, die weniger als 1.000 ppm Sauerstoff enthält, durch Bestrahlen mit energiereicher Strahlung ausgehärtet. Gemäß DE-A-41 18 731 werden matte Lackfilme hergestellt, indem eine bereits lackierte Fläche mit einem Mattierungsmittel enthaltenden strahlenhärtbarem Lack überlackiert wird, wobei der strahlenhärtbare Lack in einer solchen Schichtdicke aufgetragen wird, daß der ausgehärtete Lackfilm eine Dicke aufweist, die kleiner ist als die durchschnittliche Teilchengröße des Mattierungsmittels. Auch dieses Verfahren ist mit hohem technischen Aufwand verbunden, weil eine zusätzliche Lackschicht aufgetragen werden muß und die Schichtdicke der zusätzlich aufgetragenen Lackschicht genau kontrolliert werden muß.

Das Dokument EP-A-0 311 288 beschreibt UV-strahlenhärtbare Beschichtungsmassen bzw. Klarlacke, die 20-50 Gew.-% eines ethylenisch ungesättigten Acrylatepoxyharzes, 2-10 Gew.-% eines Acrylaturethanharzes und 10-40 Gew.-% eines (Meth)acrylatmonomeren, insbesondere Phenoxyethylacrylat enthalten. Mattlacke sind nicht angesprochen. Die eingesetzten Harze weisen überwiegend Vinylgruppen auf.

Die der vorliegenden Erfindung zugrundeliegende Aufgabenstellung bestand in der Bereitstellung von strahlenhärtbaren Lacken, mit denen ohne großen technischen Aufwand matte Lackfilme hergestellt werden können.

Diese Aufgabe konnte überraschenderweise durch Bereitstellung von strahlenhärtbaren Lacken gelöst werden, die enthalten:
- A: ein Kunstharz aus der Gruppe Polyester-, Polyacrylat- und Polyurethanharz, das 1,5 bis 5 Mol/kg, vorzugsweise 3,6 bis 4,5 Mol/kg ethylenisch ungesättigte Doppelbindungen enthält, wovon höchstens 10, vorzugsweise höchstens 5 % Vinylgruppen sind, oder eine Mischung aus solchen Kunstharzen und
- B: eine Verbindung der allgemeinen Formel Ar-O-R₁-O-CO-CR₂=CH₂, wobei Ar für einen gegebenenfalls substituierten Arylrest, vorzugsweise für einen Phenylrest, R₁ für einen Alkylenrest mit 1 bis 6 C-Atomen, vorzugsweise für einen Alkylenrest mit 1 bis 3 C-Atomen, ganz besonders bevorzugt für einen -CH₂-CH₂- Rest, und R₂ für ein H-Atom oder für einen Alkylrest mit 1 bis 3 C-Atomen, vorzugsweise für ein H-Atom oder für einen Methylrest steht, oder eine Mischung aus solchen Verbindungen
wobei 10 bis 70, vorzugsweise 20 bis 60 Gew.% der Gesamtmenge aus A und B aus der Komponente A und 30 bis 90, vorzugsweise 40 bis 80 Gew.% der Gesamtmenge aus A und B aus der Komponente B bestehen.

Mit den erfindungsgemäß bereitgestellten strahlenhärtbaren Lacken können überraschenderweise unter Verwendung der für strahlenhärtbare Lacke üblichen Applikationsvorrichtungen und Applikationsverfahren matte Lackfilme, insbesondere Lackfilme mit einem Glanzgrad zwischen 3 und 50 Einheiten nach DIN 67 530 (gemessen bei einem Meßwinkel von 60°) hergestellt werden.

Die in den erfindungsgemäßen Lacken als Komponente A eingesetzten Kunstharze sind allgemein bekannt und im Handel erhältlich. Die Komponente A ist ein Polyester-, ein Polyacrylat- oder ein Polyurethanharz oder eine Mischung aus solchen Harzen. Die Komponente A besteht vorzugsweise aus einem Polyesterharz.

Als Komponente A einsetzbare Polyesterharze können auf übliche Art und Weise aus Polyolen und Polycarbonsäuren unter eventueller Mitverwendung von Monoolen und/oder Monocarbonsäuren hergestellt werden. Die Einführung von ethylenisch ungesättigten Doppelbindungen in die Polyesterharze kann durch Einsatz von ethylenisch ungesättigte Doppelbindungen enthaltenden Polyolen und/oder ethylenisch ungesättigte Doppelbindungen enthaltenden Polycarbonsäuren und/oder ethylenisch ungesättigte Doppelbindungen enthaltenden Monoolen und/oder ethylenisch ungesättigte Doppelbindungen enthaltenden Monocarbonsäuren erfolgen. Als Komponente A werden ganz besonders bevorzugt Polyesterharze eingesetzt, die aus Fumar-bzw. Maleinsäure, Tetrahydrophthalsäure und Diethylenglykol hergestellt worden sind.

Als Komponente B enthalten die erfindungsgemäßen strahlenhärtbaren Lacke ganz besonders bevorzugt Phenoxiethylacrylat.

Neben den Komponenten A und B können die erfindungsgemäßen Lacke auch noch 0,01 bis 66, vorzugsweise 10 bis 40 Gew.%, bezogen auf A + B = 100 Gew.%, C Mattierungsmittel und/oder Füllstoffe enthalten. Als Komponente C können die erfindungsgemäßen Lacke alle Mattierungsmittel und/oder Füllstoffe enthalten, die in strahlenhärtbaren Lacken einsetzbar sind. Als Beispiele werden Kieselsäure, Bariumsulfat, Talkum, Polyolefinwachse, Polyamidwachse und Kaolin genannt. Als Komponente C wird vorzugsweise hochdisperse Kieselsäure eingesetzt.

Die erfindungsgemäßen Lacke können auch noch 0,01 bis 33, vorzugsweise 5 bis 25 Gew.%, bezogen auf A + B = 100 Gew.%, D Pigmente enthalten. Als Komponente D können die erfindungsgemäßen Lacke alle Pigmente enthalten, die in strahlenhärtbaren Lacken einsetzbar sind.

Neben den Komponenten A, B, C und D können die erfindungsgemäßen Lacke noch weitere, von der Komponente A verschiedene, für strahlenhärtbare Lacke geeignete Bindemittel, wie zum Beispiel vinylgruppenhaltige Polyacrylate oder Polymethacrylate, Polyester-, Polyether-, oder Epoxyacrylate sowie niedermolekulare aliphatische oder cycloaliphatische Ester der Acryl- oder Methacrylsäure und weitere für strahlenhärtbare Lacke übliche Zusätze, wie z.B. Photoinitiatoren, Haftvermittler, Entlüftungsmittel, Benetzungshilfsmittel, Antiabsetzmittel, und Verlaufshilfsmittel enthalten.

Die erfindungsgemäßen Lacke können mit Hilfe von energiereicher Strahlung gehärtet werden. Sie werden vorzugsweise mit Hilfe von UV-Strahlung oder mit Hilfe von Elektronenstrahlen gehärtet. Wenn die Härtung mittels UV-Strahlung erfolgen soll, wird den Lacken zweckmäßigerweise mindestens ein für UV-härtbare Lacke geeigneter Photoinitiator zugesetzt.

Die erfindungsgemäßen strahlenhärtbaren Lacke können mit Hilfe aller für strahlenhärtbare Lacke geeigneten Applikationsverfahren auf beliebige Substrate, wie zum Beispiel Metall, Glas, Holz, Holzwerkstoffe, wie z.B. Hartfaserplatten oder MDF (medium density fiber) Platten, Kunststoff und Papier aufgetragen werden und sodann mittels energiereicher Strahlung ausgehärtet werden. Auf diese Weise können überraschenderweise matte Lackfilme mit niedrigen Glanzgraden (bis hinunter zu 3 Einheiten nach DIN 67 530 bei 60 °-Meßwinkel) hergestellt werden. Die mit den erfindungsgemäßen Lacken hergestellten Lackfilme zeichnen sich durch hohe mechanische und chemische Widerstandsfähigkeit aus.

Die Erfindung wird in den Ausführungsbeispielen näher erläutert. Alle Angaben über Teile und Prozente sind als Gewichtsangaben zu verstehen, falls nicht ausdrücklich etwas anderes festgestellt wird.
- 42,0: Teile einer Mischung aus 23,1 Teilen eines ungesättigten Polyesterharzes (Bestandteile: 24,9 Gew.% Fumarsäure, 6,2 Gew.% Maleinsäure, 44,5 Gew.% Diethylenglykol und 24,3 Gew.% Tetrahydrophthalsäure) und 18,9 Teilen Dipropylenglykoldiacrylat
- 0,3: Teile eines handelsüblichen Dispergierhilfsmittels,
- 7,0: Teile hochdisperse Kieselsäure,
- 21,0: Teile Talkum,
- 14,0: Teile Rutil-Pigment (RHD-2, Hersteller: Tioxide),
- 3,5: Teile Phenoxiethylacrylat
werden in einen Mischer eingewogen und 20 Minuten bei 3000 U/min mit einem Dissolver dispergiert. Anschließend wird mit 12,2 Teilen Phenoxiethylacrylat eine Viskosität von 45 s nach DIN 53211-4 bei einer Temperatur von 20 Grad Celsius eingestellt.

Auf eine grundierte und geschliffene (Kreuzschliff mit 220er Körnung) Hartfaserplatte wird der oben beschriebene Lack mit einer Lackgießmaschine aufgetragen (75 g/m²) und mit Elektronenstrahlen gehärtet (Beschleunigungsspannung 180 kV; Dosis 120 kGy). Der Glanzgrad der so erhaltenen Lackschicht beträgt 3 Einheiten (nach DIN 67530, Meßwinkel 60°).

## Patentansprüche

1. Strahlenhärtbare Lacke, enthaltend
A ein Kunstharz aus der Gruppe Polyester-, Polyacrylat- und Polyurethanharz, das 1,5 bis 5 Mol/kg ethylenisch ungesättigte Doppelbindungen enthält, wovon höchstens 10% Vinylgruppen sind oder eine Mischung aus solchen Kunstharzen und
B eine Verbindung der allgemeinen Formel Ar-O-R₁-O-CO-CR₂=CH₂, wobei Ar für einen gegebenenfalls substituierten Arylrest, R₁ für einen Alkylenrest mit 1 bis 6 C-Atomen und R₂ für ein H-Atom oder für einen Alkylrest mit 1 bis 3 C-Atomen stehen oder eine Mischung aus solchen Verbindungen,
wobei 10 bis 70 Gew.% der Gesamtmenge aus A und B aus der Komponente A und 30 bis 90 Gew.% der Gesamtmenge aus A und B aus der Komponente B bestehen.

2. Lacke nach Anspruch 1, dadurch gekenzeichnet, daß die Komponente A aus einem Polyesterharz oder einer Mischung aus Polyesterharzen besteht.

3. Lacke nach Anspruch 1 oder 2, dadurch gekennzeichnet, daß Ar für einen Phenylrest steht.

4. Lacke nach einem der Ansprüche 1 bis 3, dadurch gekennzeichnet, daß R₁ für einen Alkylenrest mit 1 bis 3 C-Atomen steht.

5. Lacke nach einem der Ansprüche 1 bis 4, dadurch gekennzeichnet, daß R₂ für ein H-Atom oder für einen Methylrest steht.

6. Lacke nach einem der Ansprüche 1 bis 5, dadurch gekennzeichnet, daß die Komponente B aus Phenoxiethylacrylat besteht.

7. Verwendung der Lacke nach einem der Ansprüche 1 bis 6 zur Herstellung von matten Lackfilmen.

## Claims

1. Radiation-curable coating materials containing
A a synthetic resin from the group consisting of polyester resin, polyacrylate resin and polyurethane resin, containing from 1.5 to 5 mol/kg of ethylenically unsaturated double bonds of which not more than 10% are vinyl groups, or a mixture of such synthetic resins, and
B a compound of the general formula Ar-O-R₁-O-CO-CR₂=CH₂, where Ar is an optionally substituted aryl radical, R₁ is an alkylene radical having 1 to 6 carbon atoms and R₂ is a hydrogen atom or an alkyl radical having 1 to 3 carbon atoms, or a mixture of such compounds,
from 10 to 70% by weight of the total quantity of A and B comprising component A and from 30 to 90% by weight of the total quantity of A and B comprising component B.

2. Coating materials according to Claim 1, characterized in that component A comprises a polyester resin or a mixture of polyester resins.

3. Coating materials according to Claim 1 or 2, characterized in that Ar is a phenyl radical.

4. Coating materials according to one of Claims 1 to 3, characterized in that R₁ is an alkylene radical having 1 to 3 carbon atoms.

5. Coating materials according to one of Claims 1 to 4, characterized in that R₂ is a hydrogen atom or a methyl radical.

6. Coating materials according to one of Claims 1 to 5, characterized in that component B comprises phenoxyethyl acrylate.

7. Use of the coating materials according to one of Claims 1 to 6 for the production of matt coating films.

## Revendications

1. Revêtements durcissables aux rayonnements, contenant
A une résine synthétique parmi le groupe constitué d'une résine de polyester, d'une résine de polyacrylate et d'une résine de polyuréthanne, renfermant de 1,5 à 5 mol/kg de doubles liaisons éthyléniquement insaturées, dont au plus 10% sont des groupes vinyle, ou un mélange de telles résines synthétiques, et
B un composé de formule générale Ar-O-R₁-O-CO-CR₂=CH₂, dans laquelle Ar désigne un radical aryle éventuellement substitué, R₁ désigne un radical alkylène ayant de 1 à 6 atomes de carbone et R₂ désigne un atome d'hydrogène ou un radical alkyle ayant de 1 à 3 atomes de carbone, ou un mélange de tels composés,
où de 10 à 70% en poids de la quantité totale de A et B sont constitués par le composant A et de 30 à 90% en poids de la quantité totale de A et B sont constitués par le composant B.

2. Revêtements selon la revendication 1, caractérisés en ce que le composant A est constitué d'une résine de polyester ou d'un mélange de résines de polyester.

3. Revêtements selon la revendication 1 ou 2, caractérisés en ce que Ar désigne un radical phényle.

4. Revêtements selon l'une quelconque des revendications 1 à 3, caractérisés en ce que R₁ désigne un radical alkylène ayant de 1 à 3 atomes de carbone.

5. Revêtements selon l'une quelconque des revendications 1 à 4, caractérisés en ce que R₂ désigne un atome d'hydrogène ou un radical méthyle.

6. Revêtements selon l'une quelconque des revendications 1 à 5, caractérisés en ce que le composant B est constitué d'acrylate de phénoxyéthyle.

7. Utilisation des revêtements selon l'une quelconque des revendications 1 à 6 pour la production de films de revêtements mats.
